Europäisches Patentamt

European Patent Office

Office européen des brevets

(19)

(11) Veröffentlichungsnummer: **0 000 055**
**B1**

(12) **EUROPÄISCHE PATENTSCHRIFT**

(45) Veröffentlichungstag der Patentschrift: 23.09.81

(51) Int. Cl.³: **B 01 J 23/74**

(21) Anmeldenummer: **78100097.1**

(22) Anmeldetag: **06.06.78**

(54) Herstellung von silikatischen Hydrierkatalysatoren und ihre Verwendung zur Hydrierung.

(30) Priorität: **14.06.77 DE 2726710**

(43) Veröffentlichungstag der Anmeldung:
**20.12.78 Patentblatt 78/1**

(45) Bekanntmachung des Hinweises auf die Patenterteilung:
**23.09.81 Patentblatt 81/38**

(84) Benannte Vertragsstaaten:
**BE DE FR GB NL**

(56) Entgegenhaltungen:
**DE - A - 2 620 554**
**GB - A - 944 207**

(73) Patentinhaber: **BASF Aktiengesellschaft**
**Carl-Bosch-Strasse 38**
**D-6700 Ludwigshafen (DE)**

(72) Erfinder: **Schroeder, Wolfgang, Dr.**
**Seebacher Strasse 51**
**D-6702 Bad Duerkheim 1 (DE)**
Erfinder: **Franzischka, Wolfgang, Dr.**
**Kranichstrasse 11**
**D-6700 Ludwigshafen (DE)**

EP 0 000 055 B1

## 0 000 055

Herstellung von silikatischen Hydrierkatalysatoren und ihre Verwendung zur Hydrierung

Es ist bekannt, Hydrierkatalysatoren mit feiner Verteilung der wirksamen Stoffe in Aluminiumoxid dadurch herzustellen, daß man die hydrierend wirkenden Stoffe aus einer Lösung zusammen mit gelösten Aluminiumsalzen mit Hilfe einer Alkalicarbonatlösung ausfällt und für die Fällung die Kristallstruktur des Mannaseits, in einem anderen Verfahren die Kristallstruktur des Takovits anstrebt (vgl. DE—C 20 24 282, DE—A— 24 45 303).

In einem anderen Fall wird bei der Fällung ein Nickel-Aluminiumoxid-Katalysator mit amorpher Struktur erhalten.

In Katalysatorsystemen, die Kieselsäure als Träger bzw. chemisch indifferentes Verteilungsmedium anstelle von Aluminiumoxid enthalten, sucht man die feine Verteilung der wirksamen Stoffe bisher dadurch zu erreichen, daß man entweder einen porösen Träger mit einer Lösung der Stoffe tränkt oder den Träger in feinteiliger Form suspendiert und die Stoffe durch Fällung aufbringt. Methoden zur gemeinsamen Fällung von Aktivkomponente und Inertmaterial sind ebenfalls beschrieben worden.

Ein solches Verfahren, bei dem Kupfer- und Nickelkationen zusammen mit Silikationen auf einem Träger, bevorzugt ebenfalls Kieselsäure durch Fällung mittels Ammoniumbicarbonat niedergeschlagen werden, ist aus der DE—A 26 20 554 bekannt. Die danach hergestellten Katalysatoren müssen jedoch sorgfältig von Alkalimetallionen freigehalten werden, wodurch sie sonst vergiftet werden und bestehen hinsichtlich ihrer wirksamen Metalle anscheinend überwiegend aus Nickel, wobei der Gesamtgehalt an Metallen relativ niedrig ist.

Es wurde nun gefunden, daß Katalysatoren aus gemeinsamen Fällungen von Kupfer, Nickel und/oder Kobalt mit Kieselsäure bei einem Metallgehalt zwischen etwa 40 und 80 Gew.%, bezogen auf das Gesamtgewicht, d.h. den geformten, getrockneten, getemperten und reduzierten Feststoff ein deutliches Aktivitätsmaximum zeigen. Ausgeprägt ist das Maximum bei etwa 60 bis 70%, wobei gewisse Schwankungen je nach Art des Metalls beobachtet wurden.

Erfindungsgegenstand ist daher ein Verfahren zur Herstellung von Hydrierkatalysatoren, die Kupfer, Nickel oder Kobalt auf einem Kieselsäure-Träger enthalten, das dadurch gekennzeichnet ist, daß man wäßrige Lösungen von Salzen des Kupfers, Nickels und/oder Kobalts mit Alkalisilikatlösungen mit einem Verhältnis von $Me_2O$ zu $SiO_2$ über 1 (wobei Me Natrium oder Kalium bedeutet) in solchen Mengen vermischt, daß die Mischung einen pH-Wert von 6 bis 8 aufweist und der Metallgehalt an Kupfer, Nickel und/oder Kobalt im fertigen Katalysator etwa 40 bis 80 Gewichts% beträgt und die bei der Mischung ausfallenden Niederschläge in üblicher Weise gewinnt, formt, trocknet und mit reduzierenden Mitteln behandelt.

Im einzelnen wurden die Aktivitätsmaxima bei folgenden Metallkonzentrationen gefunden
für Kupfer 50 bis 80, insbesondere 60 bis 65 Gew.%,
für Nickel 50 bis 80, insbesondere 65 bis 70 Gew.%,
für Kobalt 55 bis 75, insbesondere 65 Gew.%.

Die Katalysatoren werden nach einem für alle Metalle übereinstimmenden Prinzip hergestellt. Als Metallsalz wird eine chlor- und schwefelfreie Verbindung bevorzugt, z.B. Nitrat, Acetat oder Formiat. Hieraus wird eine bevorzugte etwa 1- bis 3-molare wäßrige Lösung hergestellt.

Als Ausgangsmaterial zur Herstellung der Katalysatoren kann man handelsübliches Wasserglas (Alkalisilikatlösung) verwenden. Dieses Wasserglas kann unterschiedliche Alkalioxid/$SiO_2$-Verhältnisse aufweisen; das Molverhältnis $Me_2O/SiO_2$ kann z.B. zwischen 0,25 bis 1,4 liegen. Es handelt sich also im allgemeinen nicht um stöchiometrisch zusammengesetzte Verbindungen, wobei in der Regel Molverhältnisse um 1 (was dem Metasilikat entspricht) vorliegen. Alkalireichere Silikate lassen sich zwar herstellen, mit zunehmendem Alkaligehalt steigt jedoch die Neigung, in wäßriger Lösung hydrolytisch zu spalten, so daß hier kaum definierbare, längere Zeit stabile Verbindungen vorliegen. $SiO_2$-reiche Silikate enthalten polymere Kieselsäureanionen, wie dies für das gewöhnliche Wasserglas bekannt ist (vgl. Hollemann-Wiberg, Lehrbuch der anorg. Chemie).

Es konnte festgestellt werden, daß man für die Zwecke der Erfindung am besten von solchen stabilen Polysilikat-Anionen ausgeht. Demzufolge verwendet man als Ausgangsmaterial ein Wasserglas mit einem Molverhältnis $Me_2O : SiO_2$, das z.B. zwischen 0,5 und 1 liegt, dem man Alkalihydroxid zusetzt (Me = Na, K). Als Alkalihydroxid-Überschuß wird die Menge Alkalihydroxid verstanden, durch die das (rechnerische) Molverhältnis $Me_2O : SiO_2$ in den Bereich über 1 verschoben wird. Die so entstehende Lösung enthält also Silikationen und einen Überschuß Alkali. Die Konzentration an Silikationen ist nicht kritisch.

Die Alkalisilikat- und die Metallsalz-Lösung werden in Mengen, die unter Berücksichtigung der Konzentration das gewünschte Verhältnis ergeben, bevorzugt bei erhöhter Temperatur (z.B. bei 60 bis 90°C vereinigt. Während der Zusammenführung der beiden Lösungen wird in dem sich ergebenden Gemisch ein pH-Wert von 6 bis 8, bevorzugt um 7, aufrecht erhalten. Die hierzu notwendige Alkalihydroxidmenge wird jeweils in einem Vorversuch ermittelt.

Nach der Fällung wird der Niederschlag alkali- und nitratfrei gewaschen und dann vom Waschwasser abgetrennt.

Die Trocknung des Niederschlags wird bei schonenden Bedingungen durchgeführt. Dazu

2

**0 000 055**

verwendet man entweder eine Vakuumtrocknung bei 100 bis 120°C oder eine Sprühtrocknung bei 100 bis 150°C.

Sprühtrocknung liefert den getrockneten Katalysatorvorläufer in einer für die Hydrierung im Suspensionsverfahren geeigneten Korngröße. Die Produkte aus beiden Trocknungsmethoden sind zur Verformung zu Tabletten oder anderen für die Hydrierung im Festbett geeigneten Körper geeignet.

Beispiel 1

Zur Bereitung einer Lösung 1 wurde Kupfer-(II)-Nitrat-Hydrat (Cu(NO$_3$)$_2$ · 3H$_2$O) in Wasser zu einer 1-molaren Lösung gelöst.

Zur Bereitung der Lösung 2 wurde handelsübliches Kaliwasserglas mit 4,45 Mol SiO$_2$ pro Kilogramm und 1,52 Mol K$_2$O pro Kilogramm verwendet, und zwar in einer Menge, daß auf 1 Mol des in Lösung 1 gelösten Kupfers 0,67 Mol SiO$_2$ entfielen. Auf 1 l der Lösung 1 wurden also 150 g Kaliwasserglas verwendet. Dieses enthält nicht genügend K$_2$O zur Bindung der Nitrationen, so daß dem Wasserglas KOH zugesetzt werden mußte, und zwar 1,544 Mol KOH pro Liter Lösung 1. Für 1 l Lösung 1 enthielt die Lösung 2 als Fälläquivalent also 0,67 Mol SiO$_2$ und 1 Mol K$_2$O (= 2 Mol KOH). Die Lösung 2 wurde schließlich auf das der Lösung 1 entsprechende Volumen gebracht, um die Fällung bequem vornehmen zu können.

Die beiden Lösungen wurden im Verhältnis 1:1 einem Kessel zugeführt, der mit einem wirkungsvollen Rührer ausgestattet war. Im Rührkessel wurde durch äußere Beheizung und durch Vorwärmen der Lösungen eine Temperatur von 80 bis 90°C aufrecht erhalten. Während des Zusammengebens der Lösungen wurde durch Regulierung der Zulaufmenge der Lösung 1 in der Mutterlauge die Einhaltung eines pH-Wertes von 7 sichergestellt.

Nach beendeter Fällung wurde der rein blaue Niederschlag von der Mutterlauge abgetrennt und dann mit kaltem Wasser gewaschen bis im Waschwasser kein Nitrat mehr nachweisbar war.

Nach mechanischer Abtrennung des Niederschlags vom Waschwasser wurde in einer Vakuum-Trockenkammer bei Lufttemperaturen um 120°C getrocknet.

Die Trockenmasse hatte nun eine pastellblaue Farbe. Nach anschließender Temperaturbehandlung bei 300°C hatte die Trokkenmasse eine rein grüne Farbe, die Röntgenanalyse ergab einen amorphen Zustand. Ein Teil dieser Trockenmasse wurde mechanisch auf eine Körnung von 60 bis 100 $\mu$ gebracht, die zur Durchführung von suspensionskatalytischen Untersuchungen geeignet ist. Ein anderer Teil wurde zu zylinderförmigen Tabletten mit den Hauptmaßen 3 × 3 mm verpreßt und anschließend bei 350°C getempert. In dieser Form ist der Katalysatorvorläufer für Untersuchungen im Festbett geeignet.

Die Kupferkonzentration im reduzierten Zustand betrug 62 Gew.%. Nach dieser allgemeinen Herstellvorschrift wurden weitere Katalysatoren hergestellt, deren Zusammensetzung aus folgenden Beispielen ersichtlich ist.

3

0 000 055

| Beispiel Nr. | Zusammensetzung | Gew.% der wirksamen Stoffe im reduzierten Katalysator | Röntgenanalyse |
|---|---|---|---|
| 2 | $CuO$ . $SiO_2$ | 51 | amorph |
| 3 | $2 CuO$ . $SiO_2$ | 68 | amorph |
| 4 | $NiO$ . $SiO_2$ | 50 | amorph |
| 5 | $2 NiO$ . $SiO_2$ | 66 | amorph |
| 6 | $4 NiO$ . $SiO_2$ | 80 | amorph |
| 7 | $CoO$ . $SiO_2$ | 50 | amorph |
| 8 | $1,5 CoO$ . $SiO_2$ | 60 | amorph |
| 9 | $2 CoO$ . $SiO_2$ | 66 | amorph |
| 10 | $2,5 CoO$ . $SiO_2$ | 71 | amorph |
| 11 | $3 CoO$ . $SiO_2$ | 75 | schwach erkennbarer Anteil kristallisierten Oxids |

Anwendungsbeispiel 1

Das zur Suspensionskatalyse vorbereitete Pulver aus Beispiel 1 wurde in einer indirekt beheizten Wirbelschicht im Stickstoffstrom auf 120°C aufgeheizt. Nach Zumischung von Wasserstoff in einer Menge von 1 bis 2 Vol% des Stickstoffs beginnt die Reduktion des Kupferoxidanteils im Katalysatorvorläufer. Das dabei gebildete Wasser wurde kondensiert und gemessen. Beim Nachlassen der Wasserabscheidung wurde die Temperatur erhöht, bis schließlich 180°C erreicht waren. Dabei wurde die rechnerisch zu erwartende Wassermenge gebildet. Nunmehr wurde Stickstoffstrom abgesperrt und die Wirbelschicht mit reinem Wasserstoff beschickt.

Nach dem Abkühlen unter Wasserstoff wurde der Katalysator in einem Gemisch von Methylestern von $C_4$- bis $C_6$-Dicarbonsäuren suspendiert, so daß in der Suspension 5 Gew.% Katalysator vorhanden waren. Diese Suspension wurde zur Hydrierung in einen beheizbaren Rührautoklaven überführt. Nach Entfernen des Luftsauerstoffs wurden die Hydrierbedingungen eingestellt: 230°C und 250 bar. Das Fortschreiten der Hydrierreaktion wurden durch den Wasserstoffverbrauch und durch die Bestimmung der Esterzahl an gelegentlich entnommenen Probe verfolgt.

Das ursprüngliche Estergemisch hatte eine Esterzahl von 700, nach 12 Stunden wurde im Hydriergemisch eine Esterzahl von 60 gefunden.

Vergleichsversuch 1

Es wurde verfahren wie im Anwendungsbeispiel 1, jedoch mit dem Unterschied, daß als Katalysator ein Kupfer-Chromoxid-Katalysator nach ADKINS verwendet wurde, wie er z.B. von der Firma Girdler-Südchemie unter der Handelsbezeichnung G-13 vertrieben wird.

Nach 12 Stunden Hydrierzeit bei den im Anwendungsbeispiel 1 genannten Bedingungen wurde eine Esterzahl von 480 gefunden.

Anwendungsbeispiel 2

Es wurde verfahren wie vorstehend beschrieben, jedoch der Katalysator gemäß Beispiel 2 verwendet. Nach 12 Stunden Hydrierzeit wurde eine Esterzahl von 200 gefunden.

Anwendungsbeispiel 3

Es wurde verfahren wie im Anwendungsbeispiel 1, jedoch mit dem Unterschied, daß der Katalysator gemäß Beispiel 3 verwendet wurde. Nach der Hydrierzeit von 12 Stunden wurde eine Esterzahl von 100 gefunden.

Die vorstehenden Anwendungsbeispiele zeigen einmal den Fortschritt gegenüber dem Stand der Technik und zum anderen den besonderen Vorteil des Katalysators nach Beispiel 1 gegenüber kupferreicheren und -ärmeren, d.h. das Vorhandensein eines Maximums der katalytischen Wirkung.

4

Beispiel 12

Zur Bereitung der Lösung 1 wurde Nickelnitrat ($Ni(NO_3)_2 \cdot 6H_2O$) in Wasser gelöst, so daß eine 1-molare Lösung entstand.

Zur Bereitung der Lösung 2 wurde das im Beispiel 1 beschriebene Wasserglas verwendet, und zwar in einer Menge, daß auf 1 Mol des in der Lösung 1 gelösten Nickels 0,5 Mol $SiO_2$ entfielen. Für 1 l der Lösung 1 wurden also 112 g Kaliwasserglas verwendet. Dieses enthält nicht genügend $K_2O$ zur Bindung der Nitrationen, so daß dem Wasserglas KOH zugesetzt werden mußte, und zwar 1,66 Mol KOH pro Liter Lösung 1. Für 1 l Lösung enthielt die Lösung 2 als Fälläquivalent also 0,50 Mol $SiO_2$ und 1 Mol $K_2O$ (= 2 Mol KOH). Aus der vorstehenden Angabe ergibt sich für den fertigen Katalysator ein Gehalt von 66% Nickel.

Die Fällung wurde in der im Beispiel 1 beschriebenen Art und Weise hergestellt und behandelt.

Die getrocknete Fällung wurde bei 550°C getempert. Ein Teil dieser Masse wurde mechanisch auf eine Körnung von 60 bis 100 $\mu$ gebracht, die zur Durchführung von suspensionskatalytischen Untersuchungen geeignet ist. Ein anderer Teil wurde zu zylindrischen Tabletten mit 3 mm Höhe und 5 mm Durchmesser verpreßt. In dieser Form ist der Katalysatorvorläufer für Untersuchungen im Festbett geeignet.

Anwendungsbeispiel 4

Das zur Suspensionskatalyse vorbereitete Pulver aus Beispiel 12 wurde in einer indirekt beheizten Wirbelschicht mit umgewälztem Wasserstoff stufenweise bis auf 570°C erhitzt und dadurch reduziert.

Nach dem Abkühlen wurde der Katalysatore in einer technischen, rohen Butindiol-Lösung aufgeschlämmt, so daß eine Suspension mit 5 Gew.% Katalysator entstand. Die rohe Butindiollösung hatte nach gaschromatographischer Analyse folgende Zusammensetzung:

| | |
|---|---|
| Wasser | 60,3 Gew.% |
| Butindiol | 38,3 Gew.% |
| Propinol | 0,5 Gew.% |
| Formaldehyd | 0,3 Gew.% |
| Sonstige | 0,6 Gew.% |

Die Katalysatorsuspension wurde in eine Hochdruck-Blasensäule überführt. Bei 90 bar und 40 bis 50°C wurde die Suspension mit Wasserstoff begast. Die Strömungsgeschwindigkeit des Wasserstoffs in der (leer gedachten) Blasensäure betrug 2 cm/sec. In Zeitabständen von 10 Minuten wurden aus der Blasensäule Proben entnommen und analysiert. Als Ende der Hydrierreaktion wurde das Unterschreiten der Konzentration an intermediär entstandenem Hydroxybutyraldehyd von 0,5%, bezogen auf die wasserfreie Lösung, definiert; C=C-Mehrfachbindungen sind dann nicht mehr nachweisbar. Dieses Hydrier-Ende wurde jeweils nach 45 Minuten erreicht.

Vergleichsversuch zum Anwendungsbeispiel 4

Verwendet man als Katalysator Raney-Nickel und verfährt im übrigen wie vorstehend beschrieben, so wird das Hydrier-Ende erst nach 130 Minuten erreicht.

Anwendungsbeispiele 5 bis 7

Verfährt man wie vorstehend beschrieben, verwendet jedoch Katalysatoren, die gemäß Beispiel 4 bis 6 erhalten wurden, so findet man die nachstehend zusammengestellten Ergebnisse.

| Katalysator gemäß | Gew.% Ni im reduzierten Katalysator | Ende der Hydrier-reaktion |
|---|---|---|
| Beispiel 4 | 49,5 | 60 Minuten |
| Beispiel 5 | 66 | 45 Minuten |
| Beispiel 6 | 80 | 55 Minuten |

Die vorstehenden Anwendungsbeispiele zeigen einmal den Fortschritt gegenüber dem Stande der Technik und zum anderen den besonderen Vorteil des Katalysators nach Beispiel 5 gegenüber nickelärmeren und -reicheren Katalysatoren.

Anwendungsbeispiele 8 bis 11

Die aus den Beispielen 8 bis 11 erhaltenen Katalysatoren wurden in Korngrößen von 60 bis 100 $\mu$ in der indirekt beheizten Wirbelschicht bei Temperaturen bis maximal 550°C im Wasserstoffstrom reduziert. Sie wurden dann in Toluol aufgeschlämmt und in der Hochdruckblasensäure mit Adipinsäurerdinitril vermischt. Die Mischung bestand danach aus 76 Gew.% Toluol, 19 Gew.% Adipinsäuredinitril und 5 Gew.% Katalysator. Es wurde dann hydriert bei 90 bar, 100°C, die Strömungsgeschwindigkeit des Wasserstoffs bezogen auf die (leer gedachte) Blasensäule betrug 2 cm/sec. Das Fortschreiten der Hydrierreaktion, bei der hauptsächlich Hexamethylendiamin entsteht, wurde durch die zeitliche Zunahme der Aminzahl verfolgt. Die Ergebnisse sind in der Tabelle 3 zusammengestellt.

| Anwendungs-beispiel | Katalysator gemäß | Gew.% Co im reduzierten Katalysator | stündliche Zunahme der Aminzahl |
|---|---|---|---|
| 8 | Beispiel 8 | 60 | 14 |
| 9 | Beispiel 9 | 66 | 42 |
| 10 | Beispiel 10 | 71 | 20 |
| 11 | Beispiel 11 | 75 | 10 |
| Vergleich | Raney-Kobalt | ca. 90 | 17 |

Die vorstehenden Anwendungsbeispiele zeigen einmal den Fortschritt gegenüber dem Stand der Technik und zum anderen den besonderen Vorteil des Katalysators nach Beispiel 9 gegenüber kobaltreicheren und -ärmeren Katalysatoren.

Anwendungsbeispiel 12

Nach der allgemeinen Vorschrift des Beispiels 12 wurde ein Katalysator mit der formelmäßigen Zusammensetzung $CuO \cdot CoO \cdot SiO_2$ hergestellt, der zu Tabletten mit 5 mm Höhe und 5 mm Durchmesser verformt wurde. Im reduzierten Zustand enthielt der Katalysator also 67 Gew.% aktive Metalle. Eine thermostatierbarer druckbeständiger Reaktor enthielt 500 ml dieses Katalysators. Durch die Katalysatorschüttung wurde von oben nach unten Wasserstoff geleitet, und zwar in einer Menge, die 100 Nl je Stunde am Reaktorausgang entsprach. Dabei wurde im Reaktor ein Druck von 200 bar und eine Temperatur von 75°C eingestellt. Sodann ließ man kontinuierlich ein Gemisch aus Benzonitril und Ammoniak in einer stündlichen Menge von 1,2 l zulaufen, wobei auf 1 Volumenteil Benzonitril 2 Volumenteile Ammoniak (flüssig) verwendet wurden.

Das abgezogene Reaktionsgemisch bestand nach dem Entfernen des überschüssigen Ammoniaks aus 98 Gew.% Benzylamin, 0,05 Gew.% Benzonitril und weniger als 2% Nebenprodukten oder Verunreinigungen.

**Patentansprüche**

1. Verfahren zur Herstellung von Hydrierkatalysatoren, die Kupfer, Nickel und/oder Kobalt auf einem Kieselsäureträger enthalten, dadurch gekennzeichnet, daß man wäßrige Lösungen von Salzen des Kupfers, Nickels und/oder Kobalts mit Alkalisilikatlösungen mit einem Verhältnis von $Me_2O$ zu $SiO_2$ über 1 (wobei Me Natrium oder Kalium bedeutet) in solchen Mengen vermischt, daß die Mischung einen pH-Wert von 6 bis 8 aufweist und der Metallgehalt an Kupfer, Nickel und/oder Kobalt im fertigen Katalysator etwa 40 bis 80 Gewichts% beträgt und die bei der Mischung ausfallenden Niederschläge in üblicher Weise gewinnt, formt, trocknet und mit reduzierenden Mitteln behandelt.

2. Verfahren zur Herstellung der Katalysatoren nach Anspruch 1, dadurch gekennzeichnet, daß man etwa 1 bis 3 molare wäßrige Salzlösungen verwendet.

3. Verfahren nach Anspruch 2, dadurch gekennzeichnet, daß die Mischungs- bzw. Fällungstemperatur bei 60 bis 90°C liegt.

4. Verwendung der nach einem der Ansprüche 1 bis 3 erhaltenen Katalysatoren zur Hydrierung.

**Claims**

1. A process for the production of a hydrogenation catalyst which contains copper, nickel and/or cobalt on a silica carrier, characterized in that an aqueous solution of a salt of copper, nickel and/or cobalt is mixed with an alkali metal silicate solution having a ratio of $Me_2O$ to $SiO_2$ of more than 1 : 1 (Me denoting potassium or sodium) in such an amount that the mixture has a pH of 6 to 8 and the content of copper, nickel and/or cobalt in the finished catalyst is about 40 to 80% by weight, and, using

6

## 0 000 055

conventional methods, the precipitate formed on mixing is isolated, moulded, dried and treated with a reducing agent.

2. A process for the production of a catalyst as claimed in claim 1, characterized in that the aqueous salt solution used is from about 1 to 3 molar.

3. A process as claimed in claim 2, characterized in that the mixing temperature, i.e. the precipitation temperature, is from 60° to 90°C.

4. Use of a catalyst obtained according to any of claims 1 to 3 for hydrogenation.

**Revendications**

1. Procédé de préparation de catalyseurs d'hydrogénation, contenant du cuivre, du nickel et(ou) du cobalt sur un support d'acide silicique, caractérisé en ce que l'on mélange des solutions aqueuses de sels du cuivre, du nickel et(ou) du cobalt et des solutions de silicates de métaux alcalins avec un rapport $Me_2O : SiO_2$ supérieur à 1 (Me désignant le sodium ou le potassium) en des proportions telles que leur mélange possède un pH de 6 à 8 et la teneur en cuivre, nickel et(ou) cobalt du catalyseur terminé se situe entre environ 40 et 80% en poids, les précipités formés au moment du mélange étant séparés, façonnés et séchés de manière usuelle et traités avec des agents réducteurs.

2. Procédé de préparation des catalyseurs suivant la revendication 1, caractérisé en ce que l'on emploie des solutions aqueuses de sels d'une concentration environ 1 à 3 molaire.

3. Procédé suivant la revendication 2, caractérisé en ce que la température de mélange et de précipitation se situe entre 60 et 90°C.

4. Utilisation des catalyseurs préparés par le procédé suivant l'une des revendications 1 à 3 pour des hydrogénations.